(19)

**Europäisches Patentamt**
**European Patent Office**
**Office européen des brevets**

(11) **EP 4 783 513 A1**

(12) **EUROPEAN PATENT APPLICATION**
published in accordance with Art. 153(4) EPC

(43) Date of publication:
**29.07.2026 Bulletin 2026/31**

(21) Application number: **24868007.6**

(22) Date of filing: **21.08.2024**

(51) International Patent Classification (IPC):
**H04L 7/00** (2006.01)    **H04L 65/65** (2022.01)

(52) Cooperative Patent Classification (CPC):
**H04L 7/00; H04L 65/65**

(86) International application number:
**PCT/JP2024/029612**

(87) International publication number:
**WO 2025/062927 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 JP 2023156652**

(71) Applicant: **NEC Platforms, Ltd.
Kanagawa 213-8511 (JP)**

(72) Inventor: **HASHIMOTO, Kiyoshi
Kawasaki-shi, Kanagawa 213-8511 (JP)**

(74) Representative: **Betten & Resch
Patent- und Rechtsanwälte PartGmbB
Maximiliansplatz 14
80333 München (DE)**

(54) **PACKET GENERATION DEVICE, PACKET GENERATION METHOD, AND RECORDING MEDIUM**

(57)    In order to make it possible to equalize the generation timing of a voice packet generated by a packet generation device among a plurality of packet generation devices, this packet generation device comprises: a reception unit that receives a voice essence which is voice information corresponding to a voice; a generation unit that generates a voice packet including the voice essence in a payload; and an output unit that outputs the voice packet. The timing at which the generation unit generates each of the voice packets is the same timing among the plurality of packet generation devices with reference to a common clock synchronized with a common time source among the plurality of packet generation devices. In each of the packet generation devices, the generation interval between the voice packets is the time required for the output of one voice packet.

## Fig. 1

## Description

Technical Field

The present disclosure relates to a packet generation device, a packet generation method, and a recording medium.

Background Art

As a result of recent remarkable performance improvement in an internet protocol (IP) technology, broadcasters have found an advantage in utilizing a more versatile IP technology, and have made efforts to update a network in a station to an IP network. When an IP-based network architecture is adopted, for example, a high-speed and large-capacity network can be constructed at a low cost by using a general-purpose network device such as a general-purpose router and a general-purpose switch.

Standardization of a protocol for transmitting broadcast materials by utilizing the IP technology is also currently in progress. For example, Association of Radio Industries and Businesses (ARIB) has standardized ARIB STD-B73 (see NPL 1). The ARIB STD-B73 is a definition of a data structure for transmitting video, audio, and ancillary data in a single stream.

In a case where the audio is transmitted in the single stream, a plurality of audio samples is included in a transmitted audio real-time transport protocol (RTP) packet. In ARIB STD-B73 Version 1.0, Chapter 2, it is defined that the number of channels of audio essence that can be packed into one audio RTP packet is 4, 8, 12, or 16. The number of channels that can be transmitted in one audio RTP packet is determined according to an audio packet time due to an upper limit of an RTP packet size.

Essence refers to information according to each of the video, the audio, and the ancillary data. For example, the audio essence refers to audio information (also referred to as audio data) according to the audio. Video essence refers to video information (also referred to as video data) according to the video.

The audio packet time is a time required for outputting one audio RTP packet. The audio packet time relates to a time from a start time of a first audio sample to an end time of a last audio sample for audio samples included in the audio essence transmitted in one audio RTP packet. The audio essence is packed into the audio RTP packet at an audio packet time interval.

For example, in a case where the audio packet time is 1 ms, the number of channels that can be transmitted in one audio RTP packet is up to eight channels. In a case where the audio packet time is 1 ms, the number of audio samples included in one audio RTP packet is 48. In a case where the audio packet time is 125 $\mu$s, the number of channels that can be transmitted in one audio RTP packet is up to 16 channels. In the case where the audio packet time is 125 $\mu$s, the number of audio samples included in one audio RTP packet is six.

Citation List

Non Patent Literature

NPL 1: ARIB STD-B73, "IP Interface for Production Systems using Essence Independent and Single Stream", Version 1.0

Summary of Invention

Technical Problem

In the ARIB STD-B73, it is defined that, in the case of an audio capture device, an RTP timestamp of the audio RTP packet must reflect a sampling value of a first sample of an audio signal in the audio RTP packet. However, the ARIB STD-B73 does not define a generation timing of the audio RTP packet in each transmission node in a case where a plurality of transmission nodes is included in a broadcasting station system.

As a result, there is a possibility that each of the plurality of transmission nodes packs the audio essence into the audio RTP packet and transmits the audio RTP packet at a unique timing. In a case where the transmission timing of the audio RTP packet is different among the plurality of transmission nodes, when an audio packet stream to be received is switched as a packet in a reception node, there is a possibility that temporal discontinuity occurs in the recovered audio samples. In order to prevent the discontinuity from occurring in the recovered audio samples, it is necessary to take measures such as performing the switching after the audio packet is recovered into the audio samples in the reception node.

In view of the problem described above, an object of the present disclosure is to provide a packet generation device, a packet generation method, and a recording medium that can align, among a plurality of packet generation devices, generation timings of audio packets generated by the packet generation devices.

Solution to Problem

In one aspect of the present disclosure, a packet generation device includes reception means for receiving audio essence that is audio information according to audio, generation means for generating an audio packet including the audio essence in a payload, and output means for outputting the audio packet, in which a timing at which the generation means generates each audio packet is the same timing among a plurality of the packet generation devices with reference to a common clock synchronized with a common time source among the plurality of packet generation devices, and in each of the packet generation devices, an interval of the generation of each audio packet is a time required for outputting one audio packet.

In another aspect of the present disclosure, a packet generation method is a packet generation method of a packet generation device, and the packet generation method includes receiving audio essence that is audio information according to audio, generating an audio packet including the audio essence in a payload, and outputting the audio packet, in which a timing at which each audio packet is generated is the same timing among a plurality of the packet generation devices with reference to a common clock synchronized with a common time source among the plurality of packet generation devices, and in each of the packet generation devices, an interval of the generation of each audio packet is a time required for outputting one audio packet.

In another aspect of the present disclosure, a packet generation program recorded in a computer-readable recording medium is a packet generation program of a packet generation device, and causes a computer to achieve a reception function of receiving audio essence that is audio information according to audio, a generation function of generating an audio packet including the audio essence in a payload, and an output function of outputting the audio packet, in which a timing at which the generation function generates each audio packet is the same timing among a plurality of the packet generation devices with reference to a common clock synchronized with a common time source among the plurality of packet generation devices, and in each of the packet generation devices, an interval of the generation of each audio packet is a time required for outputting one audio packet.

Advantageous Effects of Invention

According to the present disclosure, it is possible to align, among a plurality of packet generation devices, generation timings of audio packets generated by the packet generation devices.

Brief Description of Drawings

[Fig. 1] Fig. 1 is a diagram illustrating a configuration example of a packet generation device of the present disclosure.
[Fig. 2] Fig. 2 is a diagram illustrating an example of an operation flow of the packet generation device of the present disclosure.
[Fig. 3] Fig. 3 is a diagram illustrating an example of the operation flow of the packet generation device of the present disclosure.
[Fig. 4] Fig. 4 is a diagram illustrating a logical configuration example of an IP domain of a broadcasting station system of the present disclosure.
[Fig. 5] Fig. 5 is a diagram illustrating a configuration example of a transmission node in the broadcasting station system of the present disclosure.
[Fig. 6] Fig. 6 is a diagram illustrating a configuration example of a transmission stream processing unit of the present disclosure.
[Fig. 7] Fig. 7 is a diagram illustrating an example of a timing of NextAlignmentPoint.
[Fig. 8] Fig. 8 is a diagram illustrating an example of a timing of a generation time of the present disclosure.
[Fig. 9] Fig. 9 is a diagram illustrating a configuration example of a transmission stream processing unit of the present disclosure.
[Fig. 10] Fig. 10 is a diagram illustrating a configuration example of a packet generation device of the present disclosure.
[Fig. 11] Fig. 11 is a diagram illustrating an example of an operation flow of the packet generation device of the present disclosure.
[Fig. 12] Fig. 12 is a diagram illustrating a hardware configuration example of each example embodiment of the present disclosure.

Example Embodiment

[First Example Embodiment]

A first example embodiment of the present disclosure will be described.

A specific example of a packet generation device 10 in the first example embodiment is a packet generation device 20 in a second example embodiment to be described later.

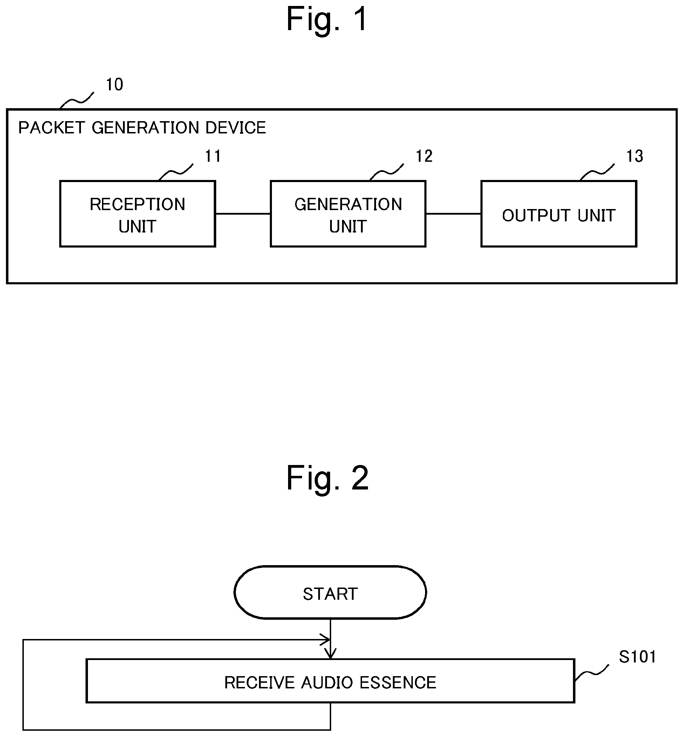

First, a configuration example of the packet generation device 10 will be described. Fig. 1 illustrates the configuration example of the packet generation device 10. The packet generation device 10 includes a reception unit 11, a generation unit 12, and an output unit 13.

The reception unit 11 receives audio essence. The audio essence is audio information according to audio.

The generation unit 12 generates an audio packet including the audio essence in a payload. A timing at which the generation unit 12 generates each audio packet is set with reference to a common clock. The common clock is synchronized with a common time source among a plurality of the packet generation devices. The timing at which the generation unit 12 generates each audio packet is the same timing among the plurality of packet generation devices. In each of the packet generation devices, an interval of the generation of each audio packet is a time required for outputting one audio packet.

The output unit 13 outputs the audio packet.

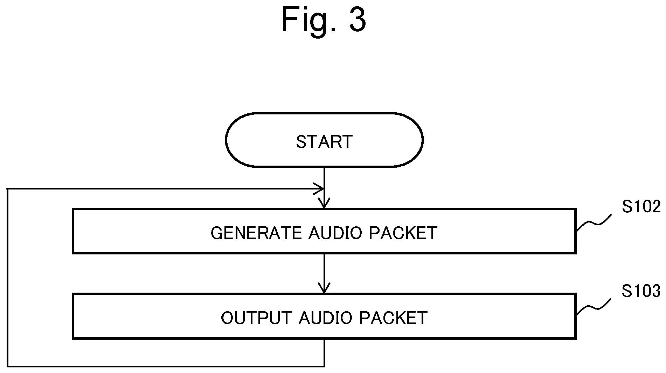

Next, an example of an operation flow of the packet generation device 10 will be described. Figs. 2 and 3 illustrate an example of the operation flow of the packet generation device 10.

The reception unit 11 receives audio essence (step S101 in Fig. 2).

The generation unit 12 generates an audio packet including the audio essence in a payload (step S102 in Fig. 3).

The output unit 13 outputs the audio packet (step S103).

As described above, in the first example embodiment of the present disclosure, the packet generation device 10 includes the reception unit 11, the generation unit 12, and the output unit 13. The reception unit 11 receives audio essence. The audio essence is audio information according to audio. The generation unit 12 generates an audio packet including the audio essence in a payload. A timing at which the generation unit 12 generates each audio packet is set with reference to a common clock. The common clock is synchronized with a common time source among a plurality of the packet generation devices. The timing at which the generation unit 12 generates each audio packet is the same timing among the plurality of packet generation devices. In each of the packet generation devices, an interval of the generation of each audio packet is a time required for outputting one audio packet. The output unit 13 outputs the audio packet.

In this manner, the packet generation device 10 generates each audio packet at the same timing among the plurality of packet generation devices. The interval of the generation of each audio packet is the time required for outputting one audio packet. As a result, the plurality of packet generation devices generates and outputs the audio packets at the same timing and at the same interval as the time required for outputting one audio packet. Therefore, it is possible to align, among the plurality of packet generation devices, the generation timings of the audio packets generated by the packet generation devices.

[Second Example Embodiment]

Next, a packet generation device 20 of a second example embodiment of the present disclosure will be described. A specific example of the packet generation device 10 in the first example embodiment is the packet generation device 20 in the second example embodiment.

<Configuration Example of Broadcasting Station System>

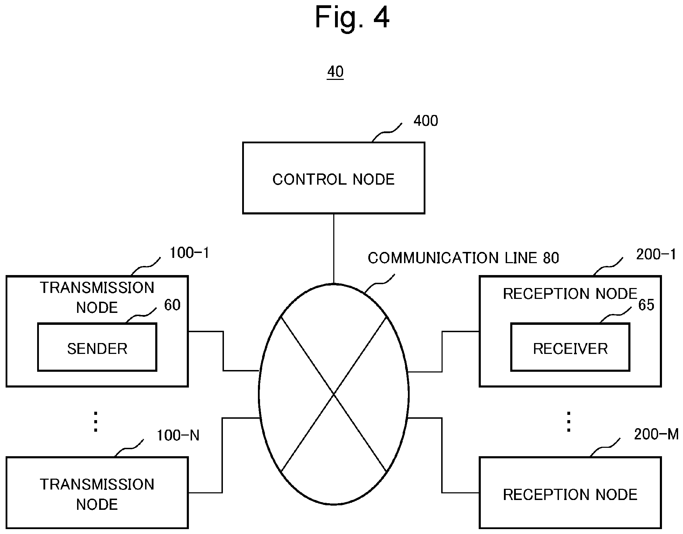

First, an outline of a broadcasting station system 40 will be described with reference to Fig. 4. Fig. 4 illustrates a logical configuration example of an IP domain of the broadcasting station system 40. The packet generation device 20 of the present disclosure can be applied to the broadcasting station system 40.

In the example illustrated in Fig. 4, in the broadcasting station system 40, a control node 400, a transmission node 100-i (i is an integer from 1 to N), and a reception node 200-j (j is an integer from 1 to M) are connected via a communication line 80. Each of transmission nodes 100-1 to 100-N may be simply referred to as a transmission node 100. Each of reception nodes 200-1 to 200-M may be simply referred to as a reception node 200.

The control node 400 controls the broadcasting station system 40.

The transmission node 100-1 includes a sender 60. The "sender" is a functional entity having a capability of transmitting a stream. Although not illustrated in Fig. 4, a transmission node other than the transmission node 100-1 also includes the sender. Each of the transmission nodes may include equal to or more than two senders. The sender may relate to a device from which the individual streams are transmitted, accommodated by the transmission node.

The reception node 200-1 includes a receiver 65. The "receiver" is a functional entity having a capability of receiving a stream. Although not illustrated in Fig. 4, a reception node other than the reception node 200-1 also includes a receiver. Each of the reception nodes may include equal to or more than two senders. The receiver may relate to a device to receive the individual streams, accommodated by the reception node.

Without being limited to the example illustrated in Fig. 4, the broadcasting station system 40 may include one or equal to or more than two transmission nodes. The broadcasting station system 40 may also include one or equal to or more than two reception nodes. The transmission node 100 may include the receiver in addition to the sender. The reception node 200 may include the sender in addition to the receiver.

<Configuration Example of Transmission Node>

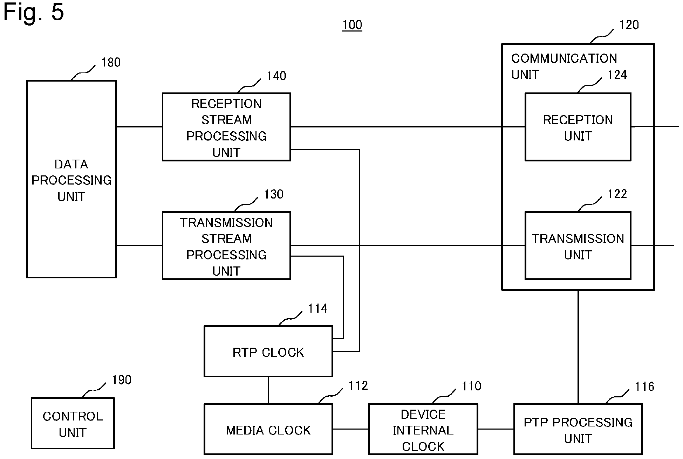

Next, a configuration example of the transmission node 100 in the broadcasting station system 40 illustrated in Fig. 4 will be described with reference to Fig. 5.

The transmission node 100 illustrated in Fig. 5 includes the functions of both the sender 60 and the receiver 65. However, in the transmission node 100, the function of the receiver 65 may be omitted.

The transmission node 100 includes a device internal clock 110, a media clock 112, an RTP clock 114, a precision time protocol (PTP) processing unit 116, a communication unit 120, a transmission stream processing unit 130, a reception stream processing unit 140, a data processing unit 180, and a control unit 190. The transmission node 100 does not have to include the reception stream processing unit 140.

(1) Device Internal Clock

The device internal clock (also referred to as a device internal clock) 110 is a unique internal clock held by the transmission node 100. In the present example embodiment, the device internal clock 110 is directly or indirectly synchronized with a PTP time source. For example, the device internal clock 110 is indirectly synchronized with the PTP time source via a PTP Grandmaster.

The PTP time source is, for example, a high-precision time source such as a global navigation satellite system (GNSS) satellite such as a global positioning system (GPS) satellite. The PTP Grandmaster has a common reference clock synchronized with the PTP time source. The PTP Grandmaster distributes a synchronization message to a node in the broadcasting station system 40 according to a PTP mechanism. Therefore, the node in the broadcasting station system 40 has the device internal clock synchronized with the common reference clock.

There may be one or equal to or more than two PTP Grandmasters. In a case where there are equal to or more than two PTP Grandmasters, the transmission node 100 can select the best PTP Grandmaster by a best master clock algorithm (PTP BMCA) or the like.

The PTP time source relates to the "common time source" in the first example embodiment. The device internal clock or the common reference clock relates to the "common clock" in the first example embodiment.

(2) Media Clock

The media clock 112 is a clock used for performing processing (for example, sampling and reconstruction) of a digital media signal. In the present example embodiment, the media clock 112 uses a Society Of Motion Picture And Television Engineers (SMPTE) epoch defined in SMPTE ST 2059-1 as an initial value 0 of the media clock 112, and is frequency-locked to the device internal clock 110 to run at an accurate rate. The SMPTE epoch is 0:00:00 AM, January 1, 1970 (international atomic time).

In the present example embodiment, the transmission node 100 supports ARIB STD-B73. The ARIB STD-B73 is a transmission protocol for transmitting different types of essence data in a single stream. In the ARIB STD-B73, a timing of each of video essence, audio essence, and ancillary data essence is associated with a video frame. In this case, the media clock 112 on which an RTP timestamp is based may be single regardless of the type of the essence data. The same applies to the RTP clock 114 to be described later.

In SMPTE ST 2110-20, a media clock frequency for the video essence is defined as 90 kHz. On the other hand, many existing broadcasting devices have a clock of 27.0 MHz. In SMPTE ST 2022-8, a media clock frequency of 27.0 MHz is defined. In a case where the media clock frequency is 90 kHz, the frequency is not an integral multiple of 60/1.001 Hz that is often used as a frequency of the video frame. On the other hand, in a case where the media clock frequency is 27.0 MHz, the frequency is an integral multiple of 60/1.001 Hz. In consideration of this point, in the present example embodiment, 27.0 MHz that is advantageous in terms of handling in that a video frame period is accurately made constant and a clock value is monotonically increased is used as a clock frequency of the media clock 112.

(3) RTP Clock

The RTP clock 114 is a clock that is a base of a timestamp given to an RTP header of an RTP packet. In the present example embodiment, it is assumed that the RTP clock 114 does not have an offset with respect to the media clock 112 in accordance with a definition in SMPTE ST 2110-10. That is, the RTP clock 114 has the same value as that of the associated media clock 112. Therefore, in the present example embodiment, a clock frequency of the RTP clock 114 is equal to 27.0 MHz similarly to the clock frequency of the media clock 112.

(4) PTP Processing Unit

In the present example embodiment, the transmission node 100 supports, for example, a PTP profile of SMPTE ST 2059-2. The PTP processing unit 116 maintains synchronization between the device internal clock 110 and the PTP time source by exchanging a synchronization message with the PTP Grandmaster via the communication unit 120. As a result, the transmission node 100 can operate in synchronization with another node having a clock also synchronized with the PTP time source with high accuracy.

(5) Communication Unit

The communication unit 120 is an interface that mediates communication with another node by the transmission node 100. The communication unit 120 may include a connection terminal and a connection circuit for wired communication. The communication unit 120 may also include an antenna, a radio frequency (RF) circuit, and a baseband circuit for wireless communication. In the present example embodiment, the communication unit 120 includes a transmission unit 122 and a reception unit 124.

The transmission unit 122 receives input of a series of RTP packets for a broadcast signal stream generated by the transmission stream processing unit 130 to be described later. Each RTP packet includes essence data of any of video, audio, and ancillary data in an RTP payload. An RTP timestamp is given to an RTP header of each RTP packet. The RTP timestamp is given according to the RTP clock 114.

The transmission unit 122 adds a network header to each input RTP packet, and transmits each RTP packet to another node participating in the broadcasting station system 40. In a case where the broadcast signal stream is an ARIB STD-B73 stream, a port number described in the network header is common to a packet carrying video data, a packet carrying audio data, and a packet carrying ancillary data.

The reception unit 124 may receive the broadcast signal stream including the series of RTP packets from another node. Each RTP packet includes the essence data related to any of the video, audio, and ancillary data in the RTP payload. In a case where the above stream is the ARIB STD-B73 stream, the series of RTP packets is received as a single stream via the common port number.

The reception unit 124 may receive a broadcast signal stream other than the ARIB STD-B73 stream from another node. For example, the reception unit 124 may receive an essence-mixed stream (for example, SMPTE ST 2022-6 stream) similar to the ARIB STD-B73 stream. The reception unit 124 may also receive an essence-separated stream such as an SMPTE ST 2110 stream.

The reception unit 124 removes the network header from each packet of the received broadcast signal stream, and outputs the RTP packet including the RTP header and the RTP payload to the reception stream processing unit 140.

(6) Transmission Stream Processing Unit

The transmission stream processing unit 130 processes a sequence of video data, audio data, and ancillary data input from the data processing unit 180, and generates the series of RTP packets for the broadcast signal stream. For example, the transmission stream processing unit 130 segments the input data sequence into one or more essence payloads, and adds an essence header to each payload. A payload type in the essence header is set to a value indicating a type of related essence. A value of a frame count is incremented by one each time a new video frame starts.

The transmission stream processing unit 130 further adds a transport header (a common header and the RTP header) to each RTP packet. A value of a sequence number in the common header is incremented by one for each time transmission is performed separately for video essence, audio essence, and ancillary data essence. A payload type in the RTP header is set to a fixed value. The value of the sequence number is incremented by one in each transmission regardless of the payload type.

The transmission stream processing unit 130 further stores the RTP timestamp in the RTP header according to the RTP clock 114. The transmission stream processing unit 130 outputs the series of RTP packets generated in this manner to the transmission unit 122.

(7) Reception Stream Processing Unit

The reception stream processing unit 140 processes the series of RTP packets of the broadcast signal stream, and recovers the video data, the audio data, or the ancillary data. The reception stream processing unit 140 receives the series of RTP packets of the broadcast signal stream from another node via the reception unit 124. The reception stream processing unit 140 outputs the recovered video data, audio data, or ancillary data to the data processing unit 180. Based on the RTP timestamp of the received RTP packet or frame count information of the received RTP packet, the reception stream processing unit 140 performs time matching of the essence data between the RTP packet and another RTP packet. The reception stream processing unit 140 acquires the RTP timestamp from the RTP header of the received RTP packet. The reception stream processing unit 140 acquires the frame count information from the header (for example, the essence header or the common header) in the RTP payload of the received RTP packet.

(8) Data Processing Unit

The data processing unit 180 generates the video data, the audio data, or the ancillary data, and outputs the sequence of the generated data to the transmission stream processing unit 130. For example, the data processing unit 180 may compress the video data input from a data source (not illustrated) and generate the compressed video data.
The data processing unit 180 may process the video data, the audio data, or the ancillary data recovered by the reception stream processing unit 140. The data processing unit 180 may synchronously reproduce a plurality of types of the essence (for example, equal to or more than two of the video essence, the audio essence, and the ancillary data essence, a plurality of types of the video essence, or the like) based on the input essence data. For example, the essence data may be recovered by the reception stream processing unit 140, and may be subjected to the time matching with each other.
The data processing unit 180 may record the video data, the audio data, or the ancillary data recovered by the reception stream processing unit 140 in a recording medium (not illustrated) in a predetermined file format. In a case where the video data input from the reception stream processing unit 140 is the compressed video data, the data processing unit 180 may decompress the compressed video data and recover the original video data.
The control unit 190 controls the overall operation of the transmission node 100 described above.

<Configuration Example of Transmission Stream Processing Unit>

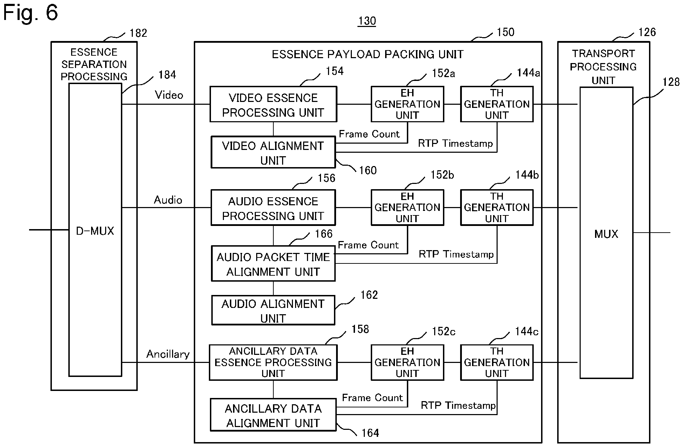

Next, a configuration example of the transmission stream processing unit 130 is illustrated in Fig. 6. The transmission stream processing unit 130 includes an essence separation processing unit 182, an essence payload packing unit 150, and a transport processing unit 126.

(1) Essence Separation Processing Unit

The essence separation processing unit 182 includes a demultiplexer (D-MUX) 184. The D-MUX 184 separates a serial digital interface (SDI) signal of the input essence data into the video essence, the audio essence, and the ancillary data essence, and outputs the video essence, the audio essence, and the ancillary data essence to the essence payload packing unit 150. A signal format of the SDI signal may be an optional derivative of an SDI, for example, SD-SDI, HD-SDI, 3G-SDI, 6G-SDI, or 12G-SDI.

(2) Essence Payload Packing Unit

The essence payload packing unit 150 includes, regarding the video essence, a video essence processing unit 154, a video alignment unit 160, an essence header generation unit (EH generation unit) 152a, and a transport header generation unit (TH generation unit) 144a. The essence payload packing unit 150 also includes, regarding the audio essence, an audio essence processing unit 156, an audio alignment unit 162, an audio packet time alignment unit 166, an essence header generation unit (EH generation unit) 152b, and a transport header generation unit (TH generation unit) 144b. The essence payload packing unit 150 also includes, regarding the ancillary data essence, an ancillary data essence processing unit 158, an ancillary data alignment unit 164, an essence header generation unit (EH generation unit) 152c, and a transport header generation (TH generation unit) unit 144c.
The video alignment unit 160 notifies the video essence processing unit 154 of a time at which the video essence is packed into the RTP payload. The packing refers to generating the RTP payload (or RTP packet) including the essence data by storing the essence data in the RTP payload.
The video essence processing unit 154 packs the video essence sequentially input from the D-MUX 184 into a payload of a video RTP packet. For example, in a case where the ARIB STD-B73 stream is transmitted, the video essence processing unit 154 packs the video essence according to a packing format of a video payload defined in the ARIB STD-B73, and generates an RTP payload of the video data.

The essence header generation unit 152a adds an essence header to a head of video datagram input from the video essence processing unit 154. The essence header generation unit 152a outputs the video datagram to which the essence header is added to the transport header generation unit 144a.

The transport header generation unit 144a adds an RTP header and a common header (that is, a transport header) to the head of the video datagram input from the essence header generation unit 152a. The transport header generation unit 144a outputs the RTP packet to which the transport header is added to the transport processing unit 126.

The ancillary data alignment unit 164 notifies the ancillary data essence processing unit 158 of a time at which the ancillary data essence is packed into the RTP payload.

The ancillary data essence processing unit 158 packs the ancillary data essence sequentially input from the D-MUX 184 into a payload of an ancillary data RTP packet. For example, in a case where the ARIB STD-B73 stream is transmitted, the ancillary data essence processing unit 158 packs the ancillary data essence according to a packing format of an ancillary data payload defined in the ARIB STD-B73, and generates an ancillary data RTP payload.

The essence header generation unit 152c adds an essence header to a head of ancillary data datagram input from the ancillary data essence processing unit 158. The essence header generation unit 152c outputs the ancillary data datagram to which the essence header is added to the transport header generation unit 144c.

The transport header generation unit 144c adds an RTP header and a common header (that is, a transport header) to the head of the ancillary data datagram input from the essence header generation unit 152c. The transport header generation unit 144c outputs the RTP packet to which the transport header is added to the transport processing unit 126.

The audio essence processing unit 156 packs the audio essence sequentially input from the D-MUX 184 into a payload of an audio RTP packet. For example, in a case where the ARIB STD-B73 stream is transmitted, the audio essence processing unit 156 packs the audio essence according to a packing format of an audio payload defined in the ARIB STD-B73, and generates an RTP payload of the audio data.

The audio essence processing unit 156 performs the packing in an audio packet time cycle. An audio packet time is a time required for outputting one audio RTP packet. The audio essence processing unit 156 packs an audio sample received during the audio packet time into one audio RTP packet. The audio RTP packet is output in the audio packet time cycle.

However, the ARIB STD-B73 does not define a generation timing of the audio RTP packet in each transmission node in a case where a plurality of transmission nodes is included in a broadcasting station system.

In the present example embodiment, the audio packet time alignment unit 166 to be described later specifies a packing timing (generation time) to the audio essence processing unit 156. The timing specified here is common to equal to or more than two transmission nodes 100. As a result, the transmission nodes 100 can align the audio packing timings among equal to or more than two transmission nodes.

The audio alignment unit 162 notifies the audio packet time alignment unit 166 of a time at which the audio essence processing unit 156 receives each audio sample. The audio essence includes the audio sample. The reception time of each audio sample is referred to as an audio sample time.

The audio alignment unit 162 calculates the audio sample time of each audio sample as an elapsed time from the SMPTE epoch. For example, the audio alignment unit 162 sets a time that is an integral multiple of an audio sampling cycle as the audio sample time of each audio sample based on an epoch time. The epoch time is the elapsed time from the SMPTE epoch.

The audio alignment unit 162 can obtain the epoch time from the device internal clock. The device internal clock may be the epoch time, or may be a time at which there is a fixed difference from the epoch time. In a case where there is the fixed difference between the device internal clock and the epoch time, the audio alignment unit 162 can grasp the epoch time based on the device internal clock and the difference.

In SMPTE ST 2110-30, an audio sampling frequency is defined as 48 kHz. As a result, the audio sample is input to the audio essence processing unit 156 in a cycle of 1/48 ms. In this case, the audio sample time has the cycle of 1/48 ms.

Information regarding the audio sampling frequency is input from the control node 400 to each of the transmission nodes 100.

The audio packet time alignment unit 166 notifies the audio essence processing unit 156 of a time at which the audio essence is packed into the RTP payload. The time at which the audio essence is packed into the RTP payload is referred to as the generation time. The generation time relates to a time at which each of the audio RTP packets is generated.

The audio packet time alignment unit 166 calculates the generation time in accordance with a rule common among the plurality of transmission nodes 100-1 to 100-N. The generation time is calculated based on a common clock synchronized with a common time source among the plurality of transmission nodes 100-1 to 100-N. The generation time is the same time among the plurality of transmission nodes 100-1 to 100-N. In the present example embodiment, in each of the transmission nodes 100-1 to 100-N, an interval of the generation time is the audio packet time.

The "common time source" is the PTP time source in the case of the present example embodiment. The "common clock" is the device internal clock or the common reference clock in the case of the present example embodiment. More specifically, the "common clock" is the epoch time in the present example embodiment. Information regarding the audio packet time is input from the control node 400 to each of the transmission nodes 100.

The audio packet time alignment unit 166 calculates the generation time as, for example, the elapsed time from the SMPTE epoch. Here, for example, the audio packet time alignment unit 166 sets a time that is an integral multiple of the audio packet time with reference to the epoch time as the generation time.

For example, in a case where the audio sampling frequency is 48 kHz and the audio packet time is 1 ms used at a conformity level of the SMPTE ST 2110-30, the generation time is a cycle of 1 ms. In a case where the audio packet time is 0.125 μs, the generation time is a cycle of 0.125 μs.

In SMPTE ST 2059-1, the following Expressions (1) and (2) are defined for the time at which the audio essence is packed into the audio RTP packet.

[Expression 1]

$$Tsamp = 1/SR \quad (1)$$

[Expression 2]

$$NextAlignmentPoint = \left\{ int\left(\frac{t}{Tsamp}\right) + 1 \right\} \times Tsamp \quad (2)$$

In Expression (1), SR indicates the audio sampling frequency (Hz). Tsamp indicates a cycle of the audio sample.

In Expression (2), t indicates the elapsed time from the SMPTE epoch (epoch time). NextAlignmentPoint is a sending time of a next RTP packet at the time t.

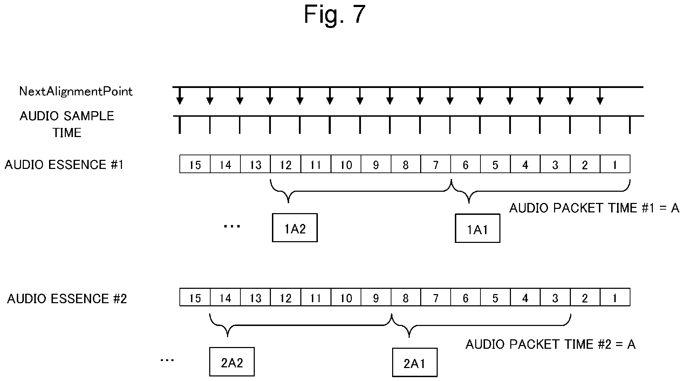

According to Expressions (1) and (2), the NextAlignmentPoint is as illustrated in Fig. 7. Fig. 7 is a diagram illustrating an example of a timing of the NextAlignmentPoint. The example of Fig. 7 is an example of a case where the audio packet time is six times the audio sampling cycle. In the example of Fig. 7, since the time of the packing is not defined, there is a possibility that the time of packing in each of the transmission nodes is different.

In a case where the time of the packing of the audio RTP packet is different among the plurality of transmission nodes, when an audio packet stream to be received is switched as a packet in the reception node, there is a possibility that temporal discontinuity occurs in the recovered audio samples. In order to prevent the discontinuity from occurring in the recovered audio samples, it is necessary to take measures such as performing the switching after the audio packet is recovered into the audio samples in the reception node.

For example, in Fig. 7, it is assumed that the reception node receives an audio RTP packet 1A1 and switches the stream to be received from audio essence #1 to audio essence #2 before receiving an audio RTP packet 1A2. In a case where the switching timing is after an audio RTP packet 2A1 is transmitted, the reception node cannot receive the audio RTP packet 2A1 and cannot receive the seventh and eighth audio samples.

In the present example embodiment, the audio packet time alignment unit 166 calculates the generation time by using the following Expression (3).

[Expression 3]

$$NextPacketTimeAlignmentPoint$$
$$= \left\{ int\left(\frac{t}{packet\_time}\right) + 1 \right\} \times packet\_time \quad (3)$$

In Expression (3), NextPacketTimeAlignmentPoint is the sending time of the next audio RTP packet at the time t, and is the generation time in the present example embodiment. The audio packet time is indicated by packet_time. In this manner, the generation time is an integral multiple of the audio packet time.

The audio packet time is an integral multiple of the audio sampling cycle. Therefore, the interval of the generation time is also an integral multiple of the audio sampling cycle. Therefore, the generation time in the present example embodiment does not violate an audio alignment definition defined in the SMPTE ST 2059-1.

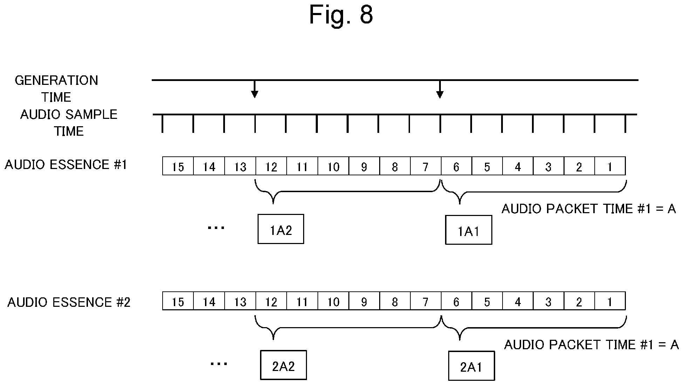

Fig. 8 illustrates an example of a timing of the generation time in the present example embodiment. As illustrated in Fig. 8, in the present example embodiment, the generation time is the audio packet time cycle. The generation time is the same among the plurality of transmission nodes. In this manner, the generation times are aligned among the plurality of transmission nodes, and thus, it is possible to reduce the possibility that the temporal discontinuity occurs in the audio samples in a case where an audio RTP packet stream received by the reception node is switched.

In the present example embodiment, the transmission nodes 100 can align the generation times of the audio RTP packets among the transmission nodes included in the broadcasting station system 40. Therefore, for example, the transmission nodes 100 can also align generation times of packets between the transmission nodes at physically distant locations. For example, it is assumed that the transmission nodes are in Osaka and Kyoto, and the reception nodes are in Tokyo. In this state, in a case where switching is performed from transmission from Osaka - reception in Tokyo to transmission from Kyoto - reception in Tokyo, it is possible to reduce the possibility that the temporal discontinuity occurs in the audio samples in a case where the switching is performed with the audio RTP packet as it is.

Since the switching can be performed with the audio RTP packet as it is, recovery processing to the audio data becomes unnecessary, and thus a processing load required for the recovery processing can be reduced and a processing delay can be reduced in the reception node. Since the switching can be performed with the audio RTP packet as it is, switching with a network switch of a commercially available product (that is, a ready-made product) also referred to as commercial off-the-shelf (COTS) becomes possible, which is advantageous also in terms of cost.

The essence header generation unit 152b adds an essence header to a head of audio datagram input from the audio essence processing unit 156. The essence header generation unit 152b outputs the audio datagram to which the essence header is added to the transport header generation unit 144b.

The transport header generation unit 144b adds an RTP header and a common header (that is, a transport header) to the head of the audio datagram input from the essence header generation unit 152b. The transport header generation unit 144b outputs the RTP packet to which the transport header is added to the transport processing unit 126.

(3) Transport Processing Unit

The transport processing unit 126 includes a multiplexer (MUX) 128. The MUX 128 multiplexes and outputs each input RTP packet. The transport processing unit 126 may further include a connection terminal and a connection circuit for wired communication, or an antenna, a radio frequency (RF) circuit, and a baseband circuit for wireless communication.

<Modification of Transmission Stream Processing Unit>

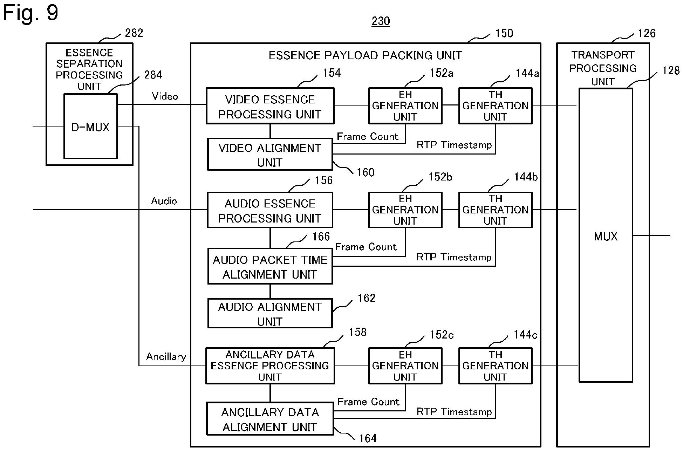

Fig. 9 illustrates a configuration example of a transmission stream processing unit 230. The transmission stream processing unit 230 is a modification of the transmission stream processing unit 130 illustrated in Fig. 6. In the transmission stream processing unit 130 illustrated in Fig. 6, the audio essence separated by the essence separation processing unit 182 is input to the audio essence processing unit 156. The transmission stream processing unit 230 illustrated in Fig. 9 includes an essence separation processing unit 282 and a D-MUX 284 instead of the essence separation processing unit 182 and the D-MUX 184. The audio essence input to the audio essence processing unit 156 may be input from the data processing unit 180 without passing through the essence separation processing unit 282.

<Configuration Example of Packet Generation Device>

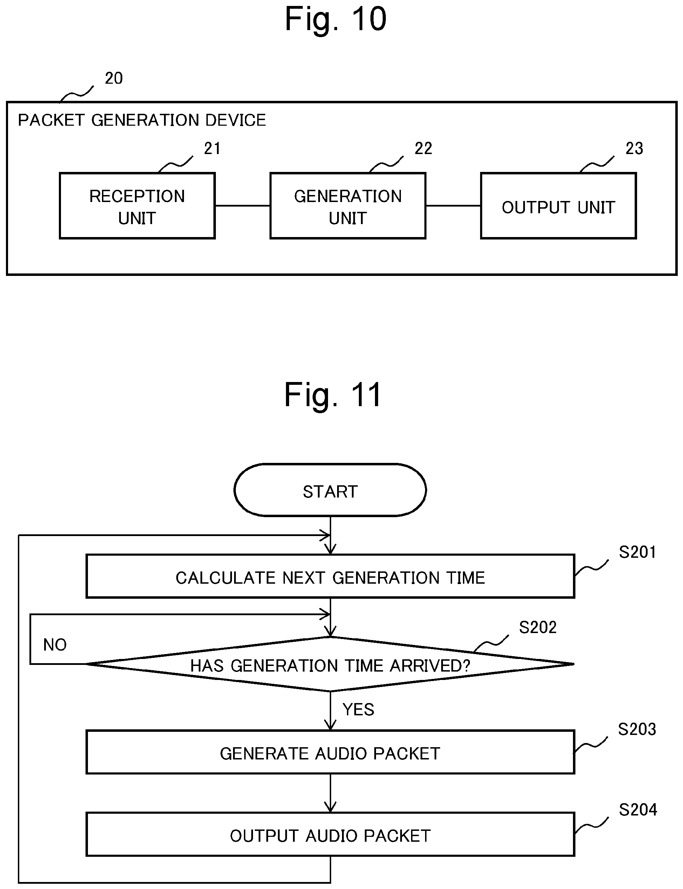

Next, a configuration example of the packet generation device 20 is illustrated in Fig. 10. The packet generation device 20 may be applied to the broadcasting station system 40. The packet generation device 20 includes a function related to audio among the functions of the transmission stream processing unit 130. The packet generation device 20 may further include a function other than the function related to audio among the functions of the transmission stream processing unit 130. The packet generation device 20 may further include a function not included in the transmission stream processing unit 130 among the functions of the transmission node 100.

The packet generation device 20 includes a reception unit 21, a generation unit 22, and an output unit 23. The packet generation device 20 relates to the audio essence processing unit 156, the audio packet time alignment unit 166, the audio alignment unit 162, the essence header generation unit 152b, and the transport header generation unit 144b in the transmission stream processing unit 130.

The reception unit 21 receives audio essence. A function of the reception unit 21 is included in the audio essence processing unit 156 in the transmission stream processing unit 130. The reception unit 21 may receive input of the audio essence from the essence separation processing unit 182, or input of the audio essence from the data processing unit 180.

The generation unit 22 generates an audio packet including the audio essence in a payload. The audio packet may be an RTP packet. The RTP packet has a data structure in an essence single stream format. The generation unit 22 includes a function other than the function of the reception unit 21 among the functions of the audio essence processing unit 156. The generation unit 22 also includes the functions of the audio packet time alignment unit 166, the audio alignment unit 162, and the essence header generation unit 152b. The generation unit 22 also includes a function other than the function of the output unit 23 among the functions of the transport header generation unit 144b.

As described above, a timing (generation time) at which the generation unit 22 generates each audio packet is the same timing among a plurality of the packet generation devices with reference to a common clock synchronized with a common time source among the plurality of packet generation devices. In each of the packet generation devices, an interval of the generation (generation time) of each audio packet is a time (audio packet time) required for outputting one audio packet.

The output unit 23 outputs the audio packet. A function of the output unit 23 is included in the function of the transport header generation unit 144b among the functions of the transmission stream processing unit 130. The output unit 23 outputs the audio packet to the transport processing unit 126.

<Operation Flow of Packet Generation Device>

Next, an example of an operation flow of the packet generation device 20 will be described. Fig. 11 illustrates an example of the operation flow of the packet generation device 20.

The generation unit 22 (audio packet time alignment unit 166) calculates a next generation time (step S201). Specifically, the generation unit 22 can calculate the next generation time by Expression (3) described above.

When the generation time arrives (YES in step S202), the generation unit 22 generates an audio packet (step S203). Specifically, the generation unit 22 (audio essence processing unit 156) packs audio essence into a payload of the audio packet. The generation unit 22 (essence header generation unit 152b) adds an essence header to a head of the audio packet. The generation unit 22 (transport header generation unit 144b) adds an RTP header and a common header (that is, a transport header) to the head of the audio packet.

The output unit 23 (transport header generation unit 144b) outputs the audio packet to the transport processing unit 126 (step S204).

As described above, in the second example embodiment of the present disclosure, the packet generation device 20 includes the reception unit 21, the generation unit 22, and the output unit 23. The reception unit 21 receives audio essence. The audio essence is audio information according to audio. The generation unit 22 generates an audio packet including the audio essence in a payload. A timing at which the generation unit 22 generates each audio packet is set with reference to a common clock. The common clock is synchronized with a common time source among a plurality of the packet generation devices. The timing at which the generation unit 22 generates each audio packet is the same timing among the plurality of packet generation devices. In each of the packet generation devices, an interval of the generation of each audio packet is a time required for outputting one audio packet. The output unit 23 outputs the audio packet.

In this manner, the packet generation device 20 generates each audio packet at the same timing among the plurality of packet generation devices. The interval of the generation of each audio packet is the time required for outputting one audio packet. As a result, the plurality of packet generation devices generates and outputs the audio packets at the same timing and at the same interval as the time required for outputting one audio packet. Therefore, it is possible to align, among the plurality of packet generation devices, the generation timings of the audio packets generated by the packet generation devices.

It is also possible to reduce the possibility that the temporal discontinuity occurs in the audio data received by the reception node in a case where the audio packet stream received by the reception node is switched.

[Hardware Configuration Example]

A configuration example of a hardware resource that achieves the packet generation device (10, 20) in each example embodiment of the present disclosure described above by using one information processing device (computer) will be described. The packet generation device may be achieved physically or functionally by using at least two information processing devices. The packet generation device may also be achieved as a dedicated device. Only some functions of the packet generation device may be achieved by using the information processing device.

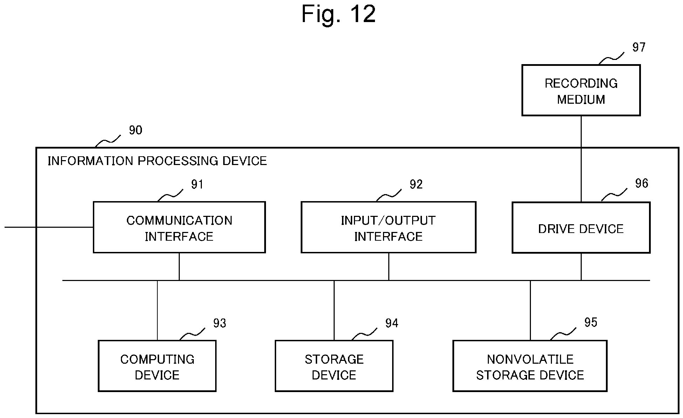

Fig. 12 is a diagram schematically illustrating a hardware configuration example of the information processing device capable of achieving the packet generation device of each example embodiment of the present disclosure. An information processing device 90 includes a communication interface 91, an input/output interface 92, a computing device 93, a storage device 94, a nonvolatile storage device 95, and a drive device 96.

For example, the reception unit 11 and the output unit 13 in Fig. 1 can be achieved by the communication interface 91 and the computing device 93, and the generation unit 12 can be achieved by the computing device 93.

The communication interface 91 is communication means for the packet generation device of each example embodiment to communicate with an external device in a wired or/and wireless manner. In a case where the packet generation device is achieved by using at least two information processing devices, the devices may be connected in such a way as to be able to communicate with each other via the communication interface 91.

The input/output interface 92 is a man-machine interface such as a keyboard as an example of an input device and a display as an output device.

The computing device 93 is achieved by a general-purpose central processing unit (CPU), an arithmetic processing device such as a microprocessor, or a plurality of electric circuits. For example, the computing device 93 can read various programs stored in the nonvolatile storage device 95 into the storage device 94, and execute processing according to the read program.

The storage device 94 is a memory device such as a random access memory (RAM) that can be referred to from the computing device 93, and stores programs, various data, and the like. The storage device 94 may be a volatile memory device.

The nonvolatile storage device 95 is, for example, a nonvolatile storage device such as a read only memory (ROM) or a flash memory, and can store various programs, data, and the like.

The drive device 96 is, for example, a device that processes reading and writing of data on a recording medium 97 to be described later.

The recording medium 97 is, for example, an optional recording medium capable of recording data, such as an optical disk, a magnetooptical disk, or a semiconductor flash memory.

Each example embodiment of the present disclosure may be achieved by, for example, configuring the packet generation device with the information processing device 90 exemplified in Fig. 12 and supplying the packet generation device with a program capable of achieving the functions described above in each example embodiment.

In this case, the computing device 93 can execute the program supplied to the packet generation device to achieve the example embodiment. Not all but some of the functions of the packet generation device can also be configured by the information processing device 90.

The above program may be recorded in the recording medium 97, and the packet generation device may be configured in such a way that the above program is appropriately stored in the nonvolatile storage device 95 at a shipment stage, an operation stage, or the like of the packet generation device. In this case, a supply method of the above program may adopt a method of installing the program in the packet generation device by using an appropriate jig in a manufacturing stage before shipment, the operation stage, or the like. The supply method of the above program may also adopt a general procedure such as a method of downloading the program from the outside via a communication line such as the Internet.

Some or all of the above example embodiments may also be described as the following Supplementary Notes, but are not limited to the following Supplementary Notes.

(Supplementary Note 1)

A packet generation device comprising:

reception means for receiving audio essence that is audio information according to audio;
generation means for generating an audio packet including the audio essence in a payload; and
output means for outputting the audio packet, wherein
a timing at which the generation means generates each audio packet is the same timing among a plurality of the packet generation devices with reference to a common clock synchronized with a common time source among the plurality of packet generation devices, and
in each of the packet generation devices, an interval of the generation of each audio packet is a time required for outputting one audio packet.

(Supplementary Note 2)

The packet generation device according to Supplementary Note 1, wherein

the audio essence includes an audio sample that is data generated by sampling the audio, and
an audio packet time indicating the time required for outputting the one audio packet is an integral multiple of a cycle of the sampling.

(Supplementary Note 3)

The packet generation device according to Supplementary Note 1 or 2, wherein
a generation time indicating the timing of generating each audio packet is a time based on an epoch time that is an elapsed time from a Society of Motion Picture and Television Engineers (SMPTE) epoch.

(Supplementary Note 4)

The packet generation device according to Supplementary Note 3, wherein
the generation time is a time that is an integral multiple of an audio packet time indicating the time required for outputting the one audio packet, at the epoch time.

(Supplementary Note 5)

The packet generation device according to any one of Supplementary Notes 1 to 4, wherein
the audio packet is a real-time transport protocol (RTP) packet.

(Supplementary Note 6)

The packet generation device according to Supplementary Note 5, wherein
the RTP packet has a data structure in an essence single stream format.

(Supplementary Note 7)

The packet generation device according to any one of Supplementary Notes 1 to 6, wherein
the time source is a precision time protocol (PTP) time source.

(Supplementary Note 8)

The packet generation device according to any one of Supplementary Notes 1 to 7, wherein
the packet generation device is included in a broadcasting station system.

(Supplementary Note 9)

A packet generation method of a packet generation device, the packet generation method comprising:

receiving audio essence that is audio information according to audio;
generating an audio packet including the audio essence in a payload; and
outputting the audio packet, wherein
a timing at which each audio packet is generated is the same timing among a plurality of the packet generation devices
with reference to a common clock synchronized with a common time source among the plurality of packet generation devices, and
in each of the packet generation devices, an interval of the generation of each audio packet is a time required for outputting one audio packet.

(Supplementary Note 10)

The packet generation method according to Supplementary Note 9, wherein

the audio essence includes an audio sample that is data generated by sampling the audio, and
an audio packet time indicating the time required for outputting the one audio packet is an integral multiple of a cycle of the sampling.

(Supplementary Note 11)

The packet generation method according to Supplementary Note 9 or 10, wherein
a generation time indicating the timing of generating each audio packet is a time based on an epoch time that is an elapsed time from an SMPTE epoch.

(Supplementary Note 12)

The packet generation method according to Supplementary Note 11, wherein
the generation time is a time that is an integral multiple of an audio packet time indicating the time required for outputting the one audio packet, at the epoch time.

(Supplementary Note 13)

The packet generation method according to any one of Supplementary Notes 9 to 12, wherein the audio packet is an RTP packet.

(Supplementary Note 14)

The packet generation method according to Supplementary Note 13, wherein the RTP packet has a data structure in an essence single stream format.

(Supplementary Note 15)

The packet generation method according to any one of Supplementary Notes 9 to 14, wherein the time source is a PTP time source.

(Supplementary Note 16)

The packet generation method according to any one of Supplementary Notes 9 to 15, wherein the packet generation device is included in a broadcasting station system.

(Supplementary Note 17)

A computer-readable recording medium recording a packet generation program of a packet generation device, for causing a computer to achieve:

a reception function of receiving audio essence that is audio information according to audio;
a generation function of generating an audio packet including the audio essence in a payload; and
an output function of outputting the audio packet, wherein
a timing at which the generation function generates each audio packet is the same timing among a plurality of the packet generation devices with reference to a common clock synchronized with a common time source among the plurality of packet generation devices, and
in each of the packet generation devices, an interval of the generation of each audio packet is a time required for outputting one audio packet.

(Supplementary Note 18)

The computer-readable recording medium recording the packet generation program according to Supplementary Note 17, wherein

the audio essence includes an audio sample that is data generated by sampling the audio, and
an audio packet time indicating the time required for outputting the one audio packet is an integral multiple of a cycle of the sampling.

(Supplementary Note 19)

The computer-readable recording medium recording the packet generation program according to Supplementary Note 17 or 18, wherein
a generation time indicating the timing of generating each audio packet is a time based on an epoch time that is an elapsed time from an SMPTE epoch.

(Supplementary Note 20)

The computer-readable recording medium recording the packet generation program according to Supplementary Note 19, wherein
the generation time is a time that is an integral multiple of an audio packet time indicating the time required for outputting the one audio packet, at the epoch time.

(Supplementary Note 21)

The computer-readable recording medium recording the packet generation program according to any one of Supplementary Notes 17 to 20, wherein

the audio packet is an RTP packet.

(Supplementary Note 22)

The computer-readable recording medium recording the packet generation program according to Supplementary Note 21, wherein

the RTP packet has a data structure in an essence single stream format.

(Supplementary Note 23)

The computer-readable recording medium recording the packet generation program according to any one of Supplementary Notes 17 to 22, wherein

the time source is a PTP time source.

(Supplementary Note 24)

The computer-readable recording medium recording the packet generation program according to any one of Supplementary Notes 17 to 23, wherein

the packet generation device is included in a broadcasting station system.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each embodiment can be appropriately combined with other embodiments.

This application is based upon and claims the benefit of priority from Japanese patent application No. 2023-156652, filed on September 22, 2023, the disclosure of which is incorporated herein in its entirety by reference.

Reference Signs List

| | |
|---|---|
| 10, 20 | packet generation device |
| 11, 21 | reception unit |
| 12, 22 | generation unit |
| 13, 23 | output unit |
| 40 | broadcasting station system |
| 60 | sender |
| 65 | receiver |
| 80 | communication line |
| 90 | information processing device |
| 91 | communication interface |
| 92 | input/output interface |
| 93 | computing device |
| 94 | storage device |
| 95 | nonvolatile storage device |
| 96 | drive device |
| 97 | recording medium |
| 100 | transmission node |
| 200 | reception node |
| 400 | control node |
| 110 | device internal clock |
| 112 | media clock |
| 114 | RTP clock |
| 116 | PTP processing unit |

| 120 | communication unit |
|---|---|
| 122 | transmission unit |
| 124 | reception unit |
| 126 | transport processing unit |
| 128 | MUX |
| 130, 230 | transmission stream processing unit |
| 140 | reception stream processing unit |
| 144a, 144b, 144c | transport header generation unit |
| 150 | essence payload packing unit |
| 152a, 152b, 152c | essence header generation unit |
| 154 | video essence processing unit |
| 156 | audio essence processing unit |
| 158 | ancillary data essence processing unit |
| 160 | video alignment unit |
| 162 | audio alignment unit |
| 164 | ancillary data alignment unit |
| 166 | audio packet time alignment unit |
| 180 | data processing unit |
| 182, 282 | essence separation processing unit |
| 184, 284 | D-MUX |
| 190 | control unit |

**Claims**

1. A packet generation device comprising:

   reception means for receiving audio essence that is audio information according to audio;
   generation means for generating an audio packet including the audio essence in a payload; and
   output means for outputting the audio packet, wherein
   a timing at which the generation means generates each audio packet is the same timing among a plurality of the packet generation devices with reference to a common clock synchronized with a common time source among the plurality of packet generation devices, and
   in each of the packet generation devices, an interval of the generation of each audio packet is a time required for outputting one audio packet.

2. The packet generation device according to claim 1, wherein

   the audio essence includes an audio sample that is data generated by sampling the audio, and
   an audio packet time indicating the time required for outputting the one audio packet is an integral multiple of a cycle of the sampling.

3. The packet generation device according to claim 1, wherein
   a generation time indicating the timing of generating each audio packet is a time based on an epoch time that is an elapsed time from a Society of Motion Picture and Television Engineers (SMPTE) epoch.

4. The packet generation device according to claim 3, wherein
   the generation time is a time that is an integral multiple of an audio packet time indicating the time required for outputting the one audio packet, at the epoch time.

5. The packet generation device according to claim 1, wherein
   the audio packet is a real-time transport protocol (RTP) packet.

6. The packet generation device according to claim 5, wherein
   the RTP packet has a data structure in an essence single stream format.

7. The packet generation device according to claim 1, wherein
   the time source is a precision time protocol (PTP) time source.

8. The packet generation device according to claim 1, wherein
the packet generation device is included in a broadcasting station system.

9. A packet generation method of a packet generation device, the packet generation method comprising:

receiving audio essence that is audio information according to audio;
generating an audio packet including the audio essence in a payload; and
outputting the audio packet, wherein
a timing at which each audio packet is generated is the same timing among a plurality of the packet generation devices with reference to a common clock synchronized with a common time source among the plurality of packet generation devices, and
in each of the packet generation devices, an interval of the generation of each audio packet is a time required for outputting one audio packet.

10. The packet generation method according to claim 9, wherein

the audio essence includes an audio sample that is data generated by sampling the audio, and
an audio packet time indicating the time required for outputting the one audio packet is an integral multiple of a cycle of the sampling.

11. The packet generation method according to claim 9, wherein
a generation time indicating the timing of generating each audio packet is a time based on an epoch time that is an elapsed time from an SMPTE epoch.

12. The packet generation method according to claim 11, wherein
the generation time is a time that is an integral multiple of an audio packet time indicating the time required for outputting the one audio packet, at the epoch time.

13. The packet generation method according to claim 9, wherein the audio packet is an RTP packet.

14. The packet generation method according to claim 13, wherein
the RTP packet has a data structure in an essence single stream format.

15. The packet generation method according to claim 9, wherein
the time source is a PTP time source.

16. The packet generation method according to claim 9, wherein
the packet generation device is included in a broadcasting station system.

17. A computer-readable recording medium recording a packet generation program of a packet generation device, for causing a computer to achieve:

a reception function of receiving audio essence that is audio information according to audio;
a generation function of generating an audio packet including the audio essence in a payload; and
an output function of outputting the audio packet, wherein
a timing at which the generation function generates each audio packet is the same timing among a plurality of the packet generation devices with reference to a common clock synchronized with a common time source among the plurality of packet generation devices, and
in each of the packet generation devices, an interval of the generation of each audio packet is a time required for outputting one audio packet.

18. The computer-readable recording medium recording the packet generation program according to claim 17, wherein

the audio essence includes an audio sample that is data generated by sampling the audio, and
an audio packet time indicating the time required for outputting the one audio packet is an integral multiple of a cycle of the sampling.

19. The computer-readable recording medium recording the packet generation program according to claim 17, wherein

a generation time indicating the timing of generating each audio packet is a time based on an epoch time that is an elapsed time from an SMPTE epoch.

20. The computer-readable recording medium recording the packet generation program according to claim 19, wherein the generation time is a time that is an integral multiple of an audio packet time indicating the time required for outputting the one audio packet, at the epoch time.

# Fig. 1

PACKET GENERATION DEVICE — 10

| RECEPTION UNIT — 11 | GENERATION UNIT — 12 | OUTPUT UNIT — 13 |

# Fig. 2

START

RECEIVE AUDIO ESSENCE — S101

# Fig. 3

```
      ┌───────────────┐
      │     START     │
      └───────┬───────┘
              │
      ┌───────▼───────────────────────────┐
  │   │   GENERATE AUDIO PACKET           │ ～ S102
  │   └───────┬───────────────────────────┘
  │           │
  │   ┌───────▼───────────────────────────┐
  │   │   OUTPUT AUDIO PACKET             │ ～ S103
  │   └───────┬───────────────────────────┘
  └───────────┘
```

# Fig. 4

40

CONTROL NODE 400

COMMUNICATION LINE 80

TRANSMISSION NODE 100-1
SENDER 60

TRANSMISSION NODE 100-N

RECEPTION NODE 200-1
RECEIVER 65

RECEPTION NODE 200-M

Fig. 5

Fig. 6

_130_

| | 182 | | | 150 | | 126 |

ESSENCE SEPARATION PROCESSING — 182

ESSENCE PAYLOAD PACKING UNIT — 150

TRANSPORT PROCESSING UNIT — 126

184

D-MUX

Video

Audio

Ancillary

128

VIDEO ESSENCE PROCESSING UNIT — 154

EH GENERATION UNIT — 152a

TH GENERATION UNIT — 144a

VIDEO ALIGNMENT UNIT — 160

Frame Count

RTP Timestamp

AUDIO ESSENCE PROCESSING UNIT — 156

EH GENERATION UNIT — 152b

TH GENERATION UNIT — 144b

AUDIO PACKET TIME ALIGNMENT UNIT — 166

Frame Count

RTP Timestamp

AUDIO ALIGNMENT UNIT — 162

ANCILLARY DATA ESSENCE PROCESSING UNIT — 158

EH GENERATION UNIT — 152c

TH GENERATION UNIT — 144c

ANCILLARY DATA ALIGNMENT UNIT — 164

Frame Count

RTP Timestamp

MUX

# Fig. 7

NextAlignmentPoint

AUDIO SAMPLE TIME

AUDIO ESSENCE #1

| 15 | 14 | 13 | 12 | 11 | 10 | 9 | 8 | 7 | 6 | 5 | 4 | 3 | 2 | 1 |

1A2  1A1

AUDIO PACKET TIME #1 = A

AUDIO ESSENCE #2

| 15 | 14 | 13 | 12 | 11 | 10 | 9 | 8 | 7 | 6 | 5 | 4 | 3 | 2 | 1 |

2A2  2A1

AUDIO PACKET TIME #2 = A

# Fig. 8

Fig. 9

# Fig. 10

PACKET GENERATION DEVICE 20

RECEPTION UNIT 21 — GENERATION UNIT 22 — OUTPUT UNIT 23

# Fig. 11

START

→ CALCULATE NEXT GENERATION TIME — S201

HAS GENERATION TIME ARRIVED? — S202

NO

YES

GENERATE AUDIO PACKET — S203

OUTPUT AUDIO PACKET — S204

Fig. 12

97

RECORDING
MEDIUM

90

INFORMATION PROCESSING DEVICE

91

COMMUNICATION
INTERFACE

92

INPUT/OUTPUT
INTERFACE

96

DRIVE DEVICE

93

COMPUTING
DEVICE

94

STORAGE
DEVICE

95

NONVOLATILE
STORAGE DEVICE

## INTERNATIONAL SEARCH REPORT

| International application No. |
|---|
| **PCT/JP2024/029612** |

| **A.** | **CLASSIFICATION OF SUBJECT MATTER** |
|---|---|

*H04L 7/00*(2006.01)i; *H04L 65/65*(2022.01)i
FI:   H04L7/00 990; H04L65/65

According to International Patent Classification (IPC) or to both national classification and IPC

| **B.** | **FIELDS SEARCHED** |
|---|---|

Minimum documentation searched (classification system followed by classification symbols)

H04L7/00; H04L65/65

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | JP 2020-162078 A (NEC CORPORATION) 01 October 2020 (2020-10-01) | 1-20 |
| A | WO 2019/053853 A1 (MEDIA LINKS CO., LTD.) 21 March 2019 (2019-03-21) | 1-20 |
| A | 菅原 正幸 (SUGAWARA, Masayuki) ＩＰ を用いた番組制作技術 －映像・音声の伝送方式 （ＳＭＰＴＥ２１１０） (IP Live Production -Audio/Video Transport Standard (SMPTE2110))、２０１９年映像情報メディア学会冬季大会講演予稿集［ＣＤ－ＲＯＭ］ (PROCEEDINGS OF THE 2019 ITE WINTER ANNUAL CONVENTION)、28 November 2019, pp. 1-3 entire text, all drawings | 1-20 |
| P, A | JP 2024-1432 A (NIPPON HOSO KYOKAI) 10 January 2024 (2024-01-10) | 1-20 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/029612** |

| Patent document<br>cited in search report | | | Publication date<br>(day/month/year) | Patent family member(s) | | | Publication date<br>(day/month/year) |
|---|---|---|---|---|---|---|---|
| JP | 2020-162078 | A | 01 October 2020 | (Family: none) | | | |
| WO | 2019/053853 | A1 | 21 March 2019 | US | 2020/0280749 | A1 | |
| JP | 2024-1432 | A | 10 January 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2023156652 A